# EUROPÄISCHE PATENTSCHRIFT

(11) **EP 1 467 130 B1**
(45) Veröffentlichungstag und Bekanntmachung des Hinweises auf die Patenterteilung: **26.03.2008**
(21) Anmeldenummer: 03027234.8
(22) Anmeldetag: 28.11.2003
(51) Int. Cl.: F16J 15/32

(54) **Vorrichtung zum Abdichten voneinander getrennter Fluidräume**
Apparatus for sealing separated fluid chambers
Dispositif pour rendre étanche des compartiments à fluide séparés

(30) Priorität: 28.02.2003 DE 10308711
(43) Veröffentlichungstag der Anmeldung: 13.10.2004
(73) Patentinhaber: AUDI AG, 85045 Ingolstadt (DE)
(72) Erfinder: Scholle, Tassilo, 85055 Ingolstadt (DE)
(74) Vertreter: Asch, Konrad

(56) Entgegenhaltungen:
- EP-A- 0 321 436
- EP-A- 1 182 133
- DE-A1- 2 003 035

## Beschreibung

Die Erfindung betrifft eine Vorrichtung zum Abdichten voneinander getrennter Fluidräume in Getrieben, insbesondere für Geschwindigkeits-Wechselgetriebe in Kraftfahrzeugen, gemäß dem Oberbegriff des Patentanspruches 1.

Insbesondere bei Geschwindigkeits-Wechselgetrieben in Kraftfahrzeugen stellt sich häufiger das Problem, voneinander getrennte Fluidräume bzw. Ölräume so abzudichten, dass keine Vermischung der verwendeten Öle auftreten kann. Aus der DE 199 478 202 A1 ist eine gattungsgemäße Abdichtvorrichtung bekannt, bei der zwischen einem Differenzialraum mit Hypoidöl und einem Getrieberaum mit ATF-Öl ein relativ aufwändiger, doppelseitiger Wellendichtring zur Abdichtung der Welle eingesetzt ist.

Aus der EP-A-321 436 ist eine Abdichtungsanordnung für eine Achse bekannt, die in einem Antriebsgehäuse, bestehend aus einem Axialteil und einem Endteil, angeordnet ist. Die Abdichtungsanordnung weist im Endteil des Antriebsgehäuses eine um eine Hohlwelle angeordnete Öldichtung, eine weitere, außenumfangsseitig in Dichtkontakt mit einer Antriebswelle befindliche Öldichtung sowie eine Öldichtung auf, die zwischen einer Bohrung und der Antriebswelle abdichtet.

Aufgabe der Erfindung ist es, eine Vorrichtung der gattungsgemäßen Art vorzuschlagen, die eine baulich besonders einfache und günstige Abdichtung mehrerer voneinander getrennter Fluidräume in einem Getriebe ermöglicht.

Diese Aufgabe wird erfindungsgemäß mit den kennzeichnenden Merkmalen des Patentanspruches 1 gelöst. Vorteilhafte Weiterbildungen des erfindungsgemäßen Verfahrens beschreiben die weiteren Patentansprüche.

Erfindungsgemäß wird vorgeschlagen, dass ein erster Wellendichtring zwischen der Hohlwelle und einem ersten Gehäusebauteil, ein zweiter Wellendichtring zwischen der Welle und der Hohlwelle und ein dritter Wellendichtring zwischen der Welle und einem weiteren Gehäusebauteil angeordnet ist, wobei ein jeder Wellendichtring nur einen Fluidraum abdichtet. Der Vorschlag beinhaltet demgemäss die Verwendung nur einfacher, kostengünstiger Wellendichtringe, wobei besonders trickreich der mittlere Wellendichtring zwischen der Hohlwelle und der Welle angeordnet ist und deshalb Wirkungsgrad günstig jeweils nur der gerade vorliegenden Relativdrehzahl von Hohlwelle und Welle ausgesetzt ist.

Ferner können die drei Wellendichtringe einander unmittelbar benachbart angeordnet sein. Dies ergibt eine vorteilhafte bauliche Gedrängtheit dieser Konstruktion, bei der auch die im allgemeinen erforderliche Entlüftung der Rückräume der Wellendichtringe besonders einfach (z. B. mittels gemeinsamer Entlüftung) innerhalb des Getriebegehäuses verwirklicht werden kann.

Des weiteren kann vorteilhaft der mittlere, zwischen der Welle und der Hohlwelle vorgesehene Wellendichtring auf der Welle befestigt sein, insbesondere indem ein auf der Welle festsitzender Ringabschnitt des Wellendichtringes auf die Welle aufgepresst oder aufgeschrumpft wird.

Bevorzugt wird ein ringförmiges Blechpressteil (evtl. auch Tiefziehteil möglich) auf der Welle befestigt, in das der Wellendichtring eingesetzt ist. Dies ergibt eine vereinfachte Konstruktion mit der Verwendbarkeit eines handelsüblichen Wellendichtringes, der baulich vorteilhaft in das Blechpressteil vor oder nach der Montage auf der Welle eingesetzt wird. Insbesondere bei einem Aufschrumpfen des Blechpressteils kann zudem eine thermische Schädigung des Wellendichtringes bei der Montage ausgeschlossen werden.

Zur Erzielung einer kurz bauenden Dichtungskonstruktion kann außerdem der auf der Welle festsitzende Ringabschnitt des Wellendichtringes in die Hohlwelle einragen.

Bei einer definierten Getriebekonstruktion kann der erste Wellendichtring in ein über der Hohlwelle angeordnetes, im wesentlichen ringförmiges Fluidzuführteil eingesetzt sein, welches Fluidzuführteil in ein gehäusefestes, ebenfalls ringförmiges Aufnahmteil einragt, wobei das Aufnahmeteil anschließend an den die Hohlwelle zur Welle abdichtenden mittleren Wellendichtring den dritten Wellendichtring trägt. Dies ermöglicht es, bei getrennter Montage der genannten Getriebebauteile die Wellendichtringe getrennt zu verbauen und durch einfaches Zusammenstecken dieser vormontierten Bauteile deren unmittelbar benachbarte Anordnung.

Dabei kann bevorzugt in dem Aufnahmeteil ein Entlüftungskanal vorgesehen sein, der in einen gemeinsamen Entlüftungsraum mündet. Der Entlüftungskanal kann dann in an sich bekannter Weise in eine druckentlastete Zone im Getriebe oder über das Getriebegehäuse in die Atmosphäre geführt sein.

Schließlich kann das Getriebe ein stufenloses Umschlingungsgetriebe mit zumindest einem integrierten Differenzial für Kraftfahrzeuge sein, dessen Fluidraum unter anderem über den mittleren Wellendichtring abgedichtet ist, wobei die beiderseits des mittleren Wellendichtringes vorgesehenen Wellendichtringe Fluidräume zur Getriebesteuerung und Getriebelagerung oder miteinander verbundene Räume abdichten.

Ein Ausführungsbeispiel der Erfindung ist im Folgenden mit weiteren Einzelheiten näher beschrieben.

Die anliegende schematische Zeichnung zeigt einen Ausschnitt aus einem Geschwindigkeits-Wechselgetriebe für Kraftfahrzeuge, mit einer ersten Welle, einer Hohlwelle und einer Vorrichtung zum Abdichten mehrerer Fluidräume des Getriebes mittels dreier Wellendichtringe.

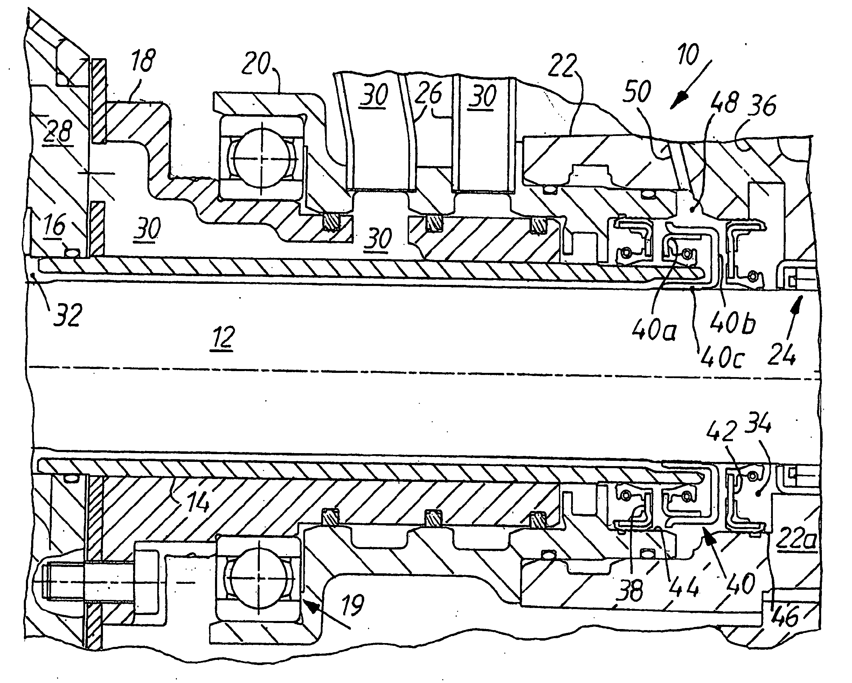

Der in der Zeichnung dargestellte Ausschnitt ist aus einem Geschwindigkeits-Wechselgetriebe bzw. einem stufenlosen Umschlingungsgetriebe (CVT) 10 für Kraftfahrzeuge und zeigt eine erste, in dem nicht dargestelltem Getriebegehäuse drehbar gelagerte Welle 12, die in nicht dargestellter Weise linksseitig mit einem Zwischenachsdifferenzial (z.B. einem Torsendifferenzial) trieblich verbunden ist und zur rechten Seite der Zeichnung ein nicht dargestelltes Abtriebszahnrad einer Abtriebsstufe trägt.

Koaxial zur Welle 12 ist eine Hohlwelle 14 bzw. eine Dichtungshülse angeordnet, die linksseitig in das Gehäuse 16 des Zwischenachsdifferenziales abgedichtet einragt. Nach rechts erstreckt sich die Hohlwelle 14 durch ein mit dem Gehäuse 16 des Zwischenachsdifferenziales fest verbundenes Ringträgerteil 18, das drehbar unter Zwischenschaltung eines Kugellagers 19 in einem festen Getriebebauteil bzw. Zuführteil 20 geführt ist.

Das ringförmige Zuführteil 20 wiederum ragt abgedichtet in ein ebenfalls abschnittsweise ringförmiges und gehäusefestes Aufnahmeteil 22 ein, in dessen nabenförmigem Abschnitt 22a die Welle 12 über ein Nadellager 24 (nur teilweise ersichtlich) gelagert ist. Das Getriebegehäuse und diverse Getriebe-Zwischenwände und Abschlussdeckel sind nicht dargestellt.

Über die nur abschnittsweise dargestellten Leitungen 26 kann zwischen das Zuführteil 20 und den Ringträgerteil 18 Hydraulikfluid in den Kanal 28 des Gehäuses 16 des Zwischenachsdifferenziales und von dort in nicht dargestellter Weise zu den hydraulisch gesteuerten An- und Abtriebsscheiben des stufenlosen Getriebes zu dessen Übersetzungssteuerung geleitet werden. Diese druckgesteuerten Bereiche radial außerhalb der Hohlwelle 14 werden als ein abzudichtender Fluidraum 30 des Getriebes 10 definiert.

Ferner ist das nicht dargestellte Zwischenachsdifferenzial und ggf. auch ein ebenfalls in das Getriebe 10 integriertes Vorderachs-Differenzial in einem gemeinsamen Fluidraum 32 ausgeführt bzw. mit einem Hypoidöl in diesem Fluidraum geschmiert, wobei dieser Fluidraum 32 sich innerhalb der Hohlwelle 14 und um die Welle 12 bis zu deren auf der Zeichnung rechts liegendem Ende fortsetzt.

Abdichtungstechnisch ist ein dritter Fluidraum 34 zwischen dem Aufnahmeteil 22 mit dem Nabenabschnitt 22a und der Welle 12 gebildet, der über einen Zuführkanal 36 im Aufnahmeteil 22 mit Hydrauliköl zur Schmierung diverser Lager (auch des Nadellagers 24) und des nicht dargestellten Abtriebs-Zahnradsatzes mit Hydrauliköl beaufschlagt ist.

Zur gegenseitigen Abdichtung der definierten Fluidräume 30, 32, 34 sind drei einfache Wellendichtringe 38, 40, 42 vorgesehen, die soweit nicht beschrieben handelsüblich ausgeführt sein können.

Dabei ist der von links nach rechts beschrieben erste Wellendichtring 38 in eine entsprechende Aufnahmebohrung 44 des Zuführteiles 20 eingesetzt und dichtet mit seiner Dichtlippe zwischen der Hohlwelle 14 und dem Zuführteil 20 den ersten definierten Fluidraum 30 ab, so dass kein Hydrauliköl zum dahinter liegenden Wellendichtring 40 gelangen kann.

Der unmittelbar benachbarte mittlere bzw. zweite Wellendichtring 40 setzt sich aus einem handelsüblichen Wellendichtring 40a und einem im Querschnitt U-förmigen Blechpressteil 40b zusammen, wobei dessen axial verlaufender Ringabschnitt 40c mit Presssitz auf der Welle 12 durch Aufpressen oder Aufschrumpfen befestigt ist. Der Ringabschnitt 40c ragt dabei wie ersichtlich in den Endabschnitt der Hohlwelle 14 ein.

Der Wellendichtring 40 dichtet mit seiner Dichtlippe den Endabschnitt der Hohlwelle 14 gegenüber der Welle 12 ab; er schließt somit den wie vorstehend definierten Fluidraum 32 ab, so dass in diesem Bereich kein Hypoidöl austreten kann.

Des weiteren ist dem Wellendichtring 40 benachbart der dritte Wellendichtring 42 in eine Aufnahmebohrung 46 des Aufnahmeteils 22 eingesetzt, der den Fluidraum 34 zur Welle 12 und zu den nach links dahinter liegenden Wellendichtringen 40, 38 abdichtet.

Zwischen den beiden äußeren Wellendichtringen 38, 42 ist innerhalb des Zuführteiles 20 und des Aufnahmeteiles 22 ein ringförmiger Entlüftungsraum 48 ausgebildet, der über einen nur abschnittsweise dargestellten Entlüftungskanal 50 im Aufnahmeteil 22 mit einer drucklosen Zone im Getriebe 10 oder an einer geodätisch hoch liegenden Stelle mit der Atmosphäre außerhalb des Getriebegehäuses des Getriebes 10 verbunden ist.

## Patentansprüche

1. Vorrichtung zum Abdichten voneinander getrennter Fluidräume in einem Getriebe, insbesondere einem Geschwindigkeits-Wechselgetriebe für Kraftfahrzeuge, mit einer ersten Welle, die durch mehrere Fluidräume innerhalb eines Getriebegehäuses verläuft, einer zweiten koaxial zur ersten Welle angeordneten Hohlwelle, die radial innen und radial außen mit unterschiedlichem Fluid beaufschlagt ist und mit zwischen der Welle, der Hohlwelle und Gehäusebauteilen des Getriebes angeordneten Dichtringen, **dadurch gekennzeichnet, dass** ein erster Wellendichtring (38) zwischen der Hohlwelle (14) und einem ersten Gehäusebauteil (20), ein zweiter Wellendichtring (40) zwischen der Welle (12) und der Hohlwelle (14) und ein dritter Wellendichtring (42) zwischen der Welle (12) und einem weiteren Gehäusebauteil (22) angeordnet ist, wobei ein jeder Wellendichtring (38, 40, 42) nur einen Fluidraum (30, 32, 34) abdichtet.

2. Vorrichtung nach Anspruch 1, **dadurch gekennzeichnet, dass** die drei Wellendichtringe (38, 40, 42) einander unmittelbar benachbart angeordnet sind.

3. Vorrichtung nach Anspruch 1 oder 2, **dadurch gekennzeichnet, dass** der mittlere, zwischen der Welle (12) und der Hohlwelle (14) vorgesehene Wellendichtring (40) auf der Welle (12) befestigt ist.

4. Vorrichtung nach Anspruch 3, **dadurch gekennzeichnet, dass** ein ringförmiges Blechpressteil (40b, 40c) auf der Welle (12) befestigt ist, in das der Wellendichtring (40a) eingesetzt ist.

5. Vorrichtung nach Anspruch 3 oder 4, **dadurch gekennzeichnet, dass** der auf der Welle (12) festsitzende Ringabschnitt (40c) des Wellendichtringes (40) in die Hohlwelle (14) einragt.

6. Vorrichtung nach einem oder mehreren der Ansprüche 1 bis 5, **dadurch gekennzeichnet, dass** der auf der Welle (12) fest sitzende Ringabschnitt (40c) des Wellendichtringes (40) auf die Welle (12) aufgepresst oder aufgeschrumpft ist.

7. Vorrichtung nach einem oder mehreren der vorhergehenden Ansprüche, **dadurch gekennzeichnet, dass** die Wellendichtringe (38, 40, 42) an einen einzigen, ringförmigen Entlüftungsraum (48) angrenzen.

8. Vorrichtung nach einem oder mehreren der Ansprüche 1 bis 7, **dadurch gekennzeichnet, dass** der erste Wellendichtring (38) in ein über der Hohlwelle (14) angeordnetes, im wesentlichen ringförmiges Fluidzuführteil (20) eingesetzt ist, welches Fluidzuführteil (20) in ein gehäusefestes, ebenfalls ringförmiges Aufnahmteil (22) einragt, wobei das Aufnahmeteil (22) anschließend an den die Hohlwelle (14) zur Welle (12) abdichtenden mittleren Wellendichtring (40) den dritten Wellendichtring (42) trägt.

9. Vorrichtung nach Anspruch 8, **dadurch gekennzeichnet, dass** in dem Aufnahmeteil (22) ein Entlüftungskanal (50) vorgesehen ist, der in den gemeinsamen Entlüftungsraum (48) mündet.

10. Vorrichtung nach einem oder mehreren der vorhergehenden Ansprüche, **dadurch gekennzeichnet, dass** das Getriebe (10) ein stufenloses Umschlingungsgetriebe mit zumindest einem integriertem Differenzial ist, dessen Fluidraum (30) u.a. über den mittleren Wellendichtring (40) abgedichtet ist und dass die beiderseits des mittleren Wellendichtringes (40) vorgesehenen Wellendichtringe (38, 42) Fluidräume (32, 34) zur Getriebesteuerung und Getriebelagerung abdichten.

## Claims

1. Apparatus for sealing separated fluid chambers in a gearbox, more particularly a variable speed gearbox for motor vehicles, having a first shaft which passes through a plurality of fluid chambers inside a gearbox casing, a second hollow shaft positioned coaxially to the first shaft, which hollow shaft is supplied radially internally and radially externally with a different fluid, and having sealing rings positioned between the shaft, the hollow shaft and casing components of the gearbox, **characterised in that** a first shaft sealing ring (38) is positioned between the hollow shaft (14) and a first casing component (20), a second shaft sealing ring (40) between the shaft (12) and the hollow shaft (14) and a third shaft sealing ring (42) between the shaft (12) and a further casing component (22), wherein each shaft sealing ring (38, 40, 42) seals off only one fluid chamber (30, 32, 34).

2. Apparatus according to claim 1, **characterised in that** the three shaft sealing rings (38, 40, 42) are positioned directly adjacent to one another.

3. Apparatus according to claim 1 or 2, **characterised in that** the middle shaft sealing ring (40) provided between the shaft (12) and the hollow shaft (14) is fastened to the shaft (12).

4. Apparatus according to claim 3, **characterised in that** an annular pressed metal part (40b, 40c) is fastened to the shaft (12), into which part the shaft sealing ring (40a) is inserted.

5. Apparatus according to claim 3 or 4, **characterised in that** the annular section (40c) of the shaft sealing ring (40) secured to the shaft (12) projects into the hollow shaft (14).

6. Apparatus according to one or more of claims 1 to 5, **characterised in that** the annular section (40c) of the shaft sealing ring (40) secured to the shaft (12) is press-fitted or shrink-fitted onto the shaft (12).

7. Apparatus according to one or more of the preceding claims, **characterised in that** the shaft sealing rings (38, 40, 42) adjoin a single, annular vent chamber (48).

8. Apparatus according to one or more of claims 1 to 7, **characterised in that** the first shaft sealing ring (38) is inserted into a substantially annular fluid delivery part (20) positioned above the hollow shaft (14), which fluid delivery part (20) projects into a likewise annular receiving part (22) fixed to the casing, wherein subsequent to the middle shaft sealing ring (40) sealing off the hollow shaft (14) to the shaft (12), the receiving part (22) supports the third shaft sealing ring (42).

9. Apparatus according to claim 8, **characterised in that** a vent channel (50) is provided in the receiving part (22), which vent channel opens into the common vent chamber (48).

10. Apparatus according to one or more of the preceding claims, **characterised in that** the gearbox (10) is a continuously variable gearbox having at least one integrated differential gear, the fluid chamber (30) whereof is sealed off inter alia by the middle shaft sealing ring (40), and **in that** the shaft sealing rings (38, 42) provided on either side of the middle shaft sealing ring (40) seal off fluid chambers (32, 34) to the gearbox control and gearbox bearings.

## Revendications

1. Dispositif d'étanchéification de compartiments à fluide séparés les uns des autres dans une transmission, en particulier une transmission de changement de vitesse pour véhicules automobiles, comportant un premier arbre, qui traverse plusieurs compartiments à fluide à l'intérieur d'un carter de transmission, un deuxième arbre creux disposé coaxialement au premier arbre, qui est alimenté radialement à l'intérieur et radialement à l'extérieur avec un fluide différent et des bagues d'étanchéité disposées entre l'arbre, l'arbre creux et les composants du carter de transmission, **caractérisé en ce qu'**un premier joint d'arbre (38) est disposé entre l'arbre creux (14) et un premier composant du carter (20), un deuxième joint d'arbre (40) entre l'arbre (12) et l'arbre creux (14) et un troisième joint d'arbre (42) entre l'arbre (12) et un autre composant du carter (22), chaque joint d'arbre (38, 40, 42) n'étanchant qu'un compartiment à fluide (30, 32, 34).

2. Dispositif selon la revendication 1, **caractérisé en ce que** les trois joints d'arbre (38, 40, 42) sont disposés à proximité immédiate les uns des autres.

3. Dispositif selon la revendication 1 ou 2, **caractérisé en ce que** le joint d'arbre (40) médian prévu entre l'arbre (12) et l'arbre creux (14) est fixé sur l'arbre (12).

4. Dispositif selon la revendication 3, **caractérisé en ce qu'**une pièce façonnée en tôle (40b, 40c) de forme annulaire, dans laquelle est inséré le joint d'arbre (40a), est fixée sur l'arbre (12).

5. Dispositif selon la revendication 3 ou 4, **caractérisé en ce que** la partie annulaire (40c) du joint d'arbre (40) fixée sur l'arbre (12) pénètre dans l'arbre creux (14).

6. Dispositif selon une ou plusieurs des revendications 1 à 5, **caractérisé en ce que** la partie annulaire (40c) du joint d'arbre (40) fixée sur l'arbre (12) est emmanchée par pression ou frettée sur l'arbre (12).

7. Dispositif selon une ou plusieurs des revendications précédentes, **caractérisé en ce que** les joints d'arbre (38, 40, 42) sont adjacents à un compartiment de ventilation (48) unique de forme annulaire.

8. Dispositif selon l'une quelconque des revendications 1 à 7, **caractérisé en ce que** le premier joint d'arbre (38) est inséré dans une pièce d'amenée de fluide (20) essentiellement annulaire disposée au-dessus de l'arbre creux (14), laquelle pièce d'amenée de fluide (20) pénètre dans une pièce de réception (22) également annulaire, fixée au carter, la pièce de réception (22) portant le troisième joint d'arbre (42) au niveau du joint d'arbre (40) médian étanchant l'arbre creux (14) par rapport l'arbre (12).

9. Dispositif selon la revendication 8, **caractérisé en ce qu'**un canal de ventilation (50), qui débouche dans le compartiment de ventilation commun (48) est prévu dans la pièce de réception (22).

10. Dispositif selon une ou plusieurs des revendications précédentes, **caractérisé en ce que** la transmission (10) est une transmission à variation continue avec au moins un différentiel intégré, dont le compartiment à fluide (30) est étanché entre autres par le biais du joint d'arbre (40) médian et que les joints d'arbre (38, 42) prévus des deux côtés du joint d'arbre (40) médian étanchent des compartiments à fluide (32, 34) pour la commande de transmission et le logement de transmission.
